# FASCICULE DE BREVET EUROPEEN

(11) **EP 0 645 274 B1**
(45) Date de publication et mention de la délivrance du brevet: **23.04.1997**
(21) Numéro de dépôt: 94114488.3
(22) Date de dépôt: 15.09.1994
(51) Int. Cl.: B60K 15/04, B65D 51/00

(54) **Tête de remplissage d'un réservoir de carburant de véhicule automobile**
Füllkopf für einen Kraftstofftank eines Fahrzeuges
Filling head for the fuel tank of a car

(30) Priorité: 29.09.1993 FR 9311580
(43) Date de publication de la demande: 29.03.1995
(73) Titulaire: PAUL JOURNEE S.A., F-60240 Reilly (FR)
(72) Inventeur: Crepin, Christophe, F-95300 Pontoise (FR); Romanek, Christian, F-60430 Noailles (FR)
(74) Mandataire: Lemaire, Marc

(56) Documents cités:
- EP-A- 0 055 952
- DE-C- 4 217 966
- FR-A- 2 529 532

## Description

La présente invention concerne une tête de remplissage pour une canalisation de remplissage d'un réservoir de carburant de véhicule automobile.

Une tête de remplissage se présente généralement sous la forme d'un logement ou d'un corps creux dont la face supérieure est ouverte dans une partie de la carrosserie du véhicule et dans lequel débouche l'extrémité libre de la canalisation de remplissage afin de permettre le remplissage du réservoir par introduction d'une lance de remplissage dans la canalisation.

L'orifice de la canalisation peut être obturé par un bouchon amovible, la face ouverte de la tête de remplissage étant elle-même éventuellement fermée par une trappe articulée.

Afin de supprimer le bouchon amovible, il a déjà été proposé une tête de remplissage du type comportant un corps en forme de bol dont la face supérieure présente un orifice de remplissage et comportant un volet d'obturation monté pivotant par rapport au bol entre une position de repos vers laquelle il est rappelé élastiquement et dans laquelle il obture l'orifice de remplissage et une position effacée à l'intérieur du bol dans laquelle l'orifice de remplissage est dégagé et vers laquelle il est entraîné lors de l'introduction de la lance de remplissage dans l'orifice de remplissage.

Dans une conception connue d'un tel type de tête de remplissage, le volet d'obturation équipé d'un simple ressort de rappel en position d'obturation, n'est pas verrouillé dans cette dernière position, ou est équipé de moyens de verrouillage à commande positive du verrouillage ou dont l'ouverture dépend de l'ouverture de la trappe d'accès à la tête de remplissage.

L'utilisation d'un volet d'obturation ne comportant pas de moyens de verrouillage présente un risque d'introduction accidentelle d'éléments polluants dans le réservoir. Ceci est notamment le cas lorsque, au cours d'opérations de nettoyage du véhicule, on nettoie la trappe d'accès et la zone environnante de l'orifice de remplissage au moyen d'un jet d'eau ou de vapeur sous pression, cette pression pouvant être suffisante pour provoquer l'ouverture accidentelle du volet d'obturation.

Lorsque le volet est équipé d'un dispositif de verrouillage à commande externe, son verrouillage dépend alors d'une action positive de l'utilisateur et cette solution n'est pas entièrement satisfaisante dans la mesure où il existe un risque d'oubli des opérations de verrouillage par l'utilisateur.

Afin de remédier à ces inconvénients, l'invention propose une tête de remplissage telle que définie dans le préambule de la revendication 1 et du type divulgué dans le document FR-A-2529532 comportant des moyens de verrouillage automatique en position de repos du volet d'obturation comportant un rotor de commande du déverrouillage monté tournant entre une position de verrouillage et une position de déverrouillage, le volet d'obturation étant rappelé élastiquement en appui contre un siège formé autour de l'orifice de remplissage, les moyens de verrouillage comportant au moins un doigt de verrouillage monté mobile entre une position de verrouillage vers laquelle il est sollicité élastiquement et dans laquelle il s'étend en regard d'une portion de la face inférieure du volet, et une position de déverrouillage dans laquelle il est escamoté latéralement en retrait de ladite portion de la
face inférieure du volet d'obturation, et le rotor de commande du déverrouillage commandant les déplacements du doigt de verrouillage à l'encontre des moyens élastiques qui le sollicitent caractérisé en ce que le doigt de verrouillage est agencé dans la partie centrale d'un bras de verrouillage dont une première extrémité est montée articulée par rapport au bol autour d'un axe perpendiculaire à la face supérieure du bol, qui entoure le bord latéral du volet d'obturation et dont la seconde extrémité comporte une surface de commande susceptible de coopérer avec une came de commande liée en rotation avec le rotor de commande.

La solution proposée selon l'invention permet donc d'assurer un verrouillage automatique du volet d'obturation, sans intervention de l'utilisateur lors du retrait de la lance de distribution de carburant. La solution permet par ailleurs s'assurer un déverrouillage du volet d'obturation, avant l'introduction de la lance, par une action positive de l'utilisateur indépendante de toute autre action telle que par exemple celle nécessaire à la decondamnation de la trappe d'accès à la tête de remplissage.

Selon des modes de réalisation de l'invention :
- le rotor de commande est monté autour d'un axe perpendiculaire à l'axe de pivotement du volet d'obturation;
- l'axe de rotation du rotor est perpendiculaire à la face supérieure du bol ;
- la came de commande est formée sur la paroi latérale d'un tambour de commande lié en rotation avec le rotor de commande ;
- le tambour de commande est monté tournant par rapport au rotor de commande et il est prévu des moyens d'accouplement en rotation entre le tambour et le rotor de commande qui autorisent un débattement angulaire relatif entre ces deux éléments ;
- le rotor comporte une patte radiale d'accouplement qui s'étend dans une lumière en forme de secteur cylindrique qui est formée dans le tambour de commande et dont l'angle détermine la valeur dudit débattement angulaire ;
- le volet comporte un élément de butée dont une face latérale coopère avec ladite surface de commande du bras de verrouillage portant le doigt de verrouillage pour maintenir ce dernier en position déverrouillée lorsque le volet d'obturation est dans sa position effacée et le tambour en position de verrouillage ;
- le tambour de commande est adjacent à l'axe de pivotement du volet d'obturation et l'élément de butée est formé sur le bras de butée qui s'étend en-dessous de la face inférieure du volet d'obturation et qui comporte une surface de butée qui coopère avec la dite surface de commande ;
- la surface de commande est formée sur un prolongement du bras de verrouillage qui s'étend parallèlement à l'axe d'articulation du bras de verrouillage ;
- la came de commande est rappelée élastiquement vers sa position de verrouillage et il est prévu des moyens d'immobilisation temporaire de la came en position de déverrouillage qui sont portés par le bras de verrouillage ;
- le rotor de commande est solidaire en rotation du barillet d'un verrou de commande du déverrouillage ;
- le rotor de commande est solidaire en rotation d'un bouton de commande du déverrouillage ;
- la tête comporte des moyens élastiques de rappel du rotor en position de verrouillage ;
- la face supérieure du bol est constituée par un couvercle dans lequel est formé l'orifice de remplissage et le volet d'obturation est articulé sur la face inférieure du couvercle ;
- la tête présente une symétrie de conception de part et d'autre d'un plan médian perpendiculaire à l'axe de pivotement du volet d'obturation.

D'autres caractéristiques et avantages de l'invention apparaîtront à la lecture de la description détaillée qui va suivre pour la compréhension de laquelle on se reportera aux dessins annexés dans lesquels :
- La figure 1 est une vue partielle en section selon la ligne 1-1 de la figure 2 d'une tête de remplissage réalisée conformément aux enseignements de l'invention ;
- la figure 2 est une vue en section selon la ligne 2-2 de la figure 1 ;
- la figure 3 est une vue à plus petite échelle, similaire à celle de la figure 2, qui illustre une tête de remplissage complète ;
- la figure 4 est une vue schématique partielle en perspective de certains des composants agencés à la partie supérieure de la tête de remplissage ;
- la figure 5 est une vue similaire à celle de la figure 1 dans laquelle le volet d'obturation est représenté en position fermée et déverrouillée ; et
- la figure 6 est une vue similaire à celle de la figure 2 dans laquelle le volet d'obturation est représenté en position ouverte et effacé à l'intérieur de la tête de remplissage sous l'action d'une lance de distribution de carburant introduite dans la tête de remplissage, le verrou pour l'entraînement du rotor de commande étant ici remplacé par un bouton rotatif de commande.

La tête de remplissage 10 illustrée sur les figures se compose pour l'essentiel d'un corps en forme générale de bol cylindrique creux 12 dont le fond 13 comporte un trou d'évacuation 14 prévu pour être relié à l'extrémité supérieure d'une canalisation de remplissage d'un réservoir de carburant de véhicule automobile (non représentée), et d'un couvercle supérieur en forme générale de disque 16.

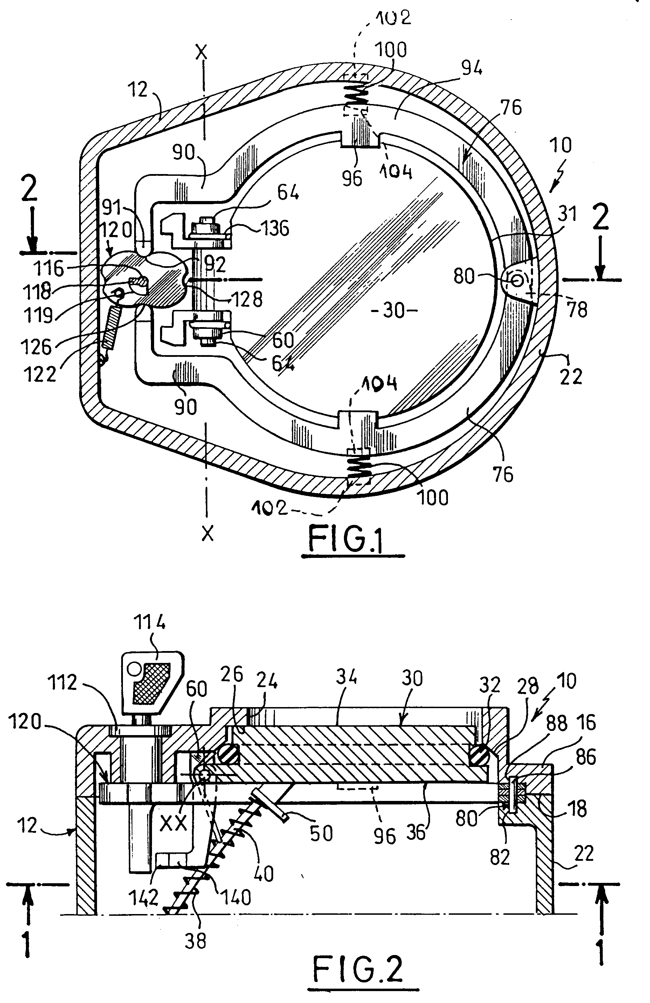

La tête de remplissage illustrée sur les figures présente une symétrie générale de conception et de réalisation selon le plan vertical médian indiqué par la ligne 2-2 de la figure 1.

La face inférieure 18 du couvercle 16 prend appui contre un épaulement formé dans la paroi latérale en forme de jupe 22 du bol 12, au voisinage de la partie supérieure de cette dernière.

Le couvercle 16 est fixé, par des moyens non représentés, sur la face supérieure du bol 12, par exemple par soudage.

Le couvercle 16 comporte un orifice central de remplissage 24 qui possède un profil étagé délimitant un épaulement radial d'appui 26 tourné vers l'intérieur du bol 12 et un siège conique d'étanchéité 28.

La tête de remplissage comporte également un volet 30 d'obturation de l'orifice 24.

Le volet 30 est monté articulé sous le couvercle 16, par des moyens qui seront décrits en détail par la suite, autour d'un axe de pivotement X-X parallèle au plan du couvercle 16.

Le volet d'obturation comporte une garniture d'étanchéité réalisée sous la forme d'un joint torique 32 qui, dans la position d'obturation illustrée notamment à la figure 2, est en appui contre le siège 28.

La face inférieure 36 du volet 30 est, en position d'obturation, parallèle au plan de la face inférieure 18 du couvercle.

Selon une caractéristique connue, le volet d'obturation 30 est rappelé élastiquement vers sa position de repos et d'obturation par un ressort hélicoïdal de compression 38 qui est porté par une tige de guidage incurvée 40.

L'extrémité libre 42 de la tige 40 traverse un trou de guidage 44 formé au voisinage du fond 13 du bol 12 et l'extrémité inférieure 46 du ressort 38 prend appui contre la surface intérieure du bol autour du trou 44.

L'extrémité supérieure 48 du ressort 38 prend appui contre une patte 50 d'une tête 52 d'articulation de la tige 40 sur la face inférieure 36 du volet d'obturation 30.

A cet effet, la tête 52 est montée pivotante autour d'un axe 54 et la face inférieure 36 comporte un évidement 56 pour permettre le mouvement de pivotement de la tête 52 autour de son axe 54.

Le ressort de rappel 38 sollicite ainsi en permanence le volet d'obturation 30 en rotation autour de l'axe X-X, dans le sens anti-horaire en considérant la figure 2, en position d'appui étanche d'obturation de la garniture 32 contre le siège 28.

La face inférieure 18 du couvercle 16 comporte, comme on peut le voir sur la figure 1, deux pattes en saillie 60 comportant chacune un trou prévu pour recevoir une extrémité opposée d'un axe 62 d'articulation du volet d'obturation 30 sur le couvercle 16.

L'axe 62 comporte des portions d'extrémité cylindriques 64 qui sont montées à rotation dans des trous formés dans les pattes 60.

Le volet 30 est ainsi monté pivotant autour de l'axe X-X.

On décrira maintenant en détail les moyens de verrouillage du volet d'obturation 30 en position fermée ainsi que les moyens de commande de ces moyens de verrouillage.

La tête de remplissage comporte à cet effet deux bras de verrouillage 76 de forme générale incurvée dont chacun entoure le bord latéral sensiblement circulaire 31 du volet d'obturation 30 et s'étend dans un plan parallèle à la face supérieure de la tête de remplissage 10.

La première extrémité 78 de chaque bras de verrouillage est montée articulée autour d'un axe 80, perpendiculaire à l'axe X-X et à la face supérieure du bol 12, dont l'extrémité inférieure est reçue dans un logement 82 formé dans la paroi périphérique 22 bol, et plus précisément dans une face d'appui située à l'intérieur de cette dernière, et dont l'extrémité supérieure 86 est reçue dans un trou correspondant 88 formé dans la face inférieure 18 du couvercle.

L'extrémité opposée 90 de chaque bras de verrouillage 76 comporte une surface de commande 92 formée sur un prolongement vertical 91 qui s'étend perpendiculairement au bras, les deux surfaces 92 s'étendant en vis-à-vis l'une de l'autre.

Chaque bras de verrouillage 76 comporte, dans sa partie centrale 94, un doigt de verrouillage 96 qui s'étend transversalement, c'est-à-dire en direction de l'axe général du bol 12 en dessous de la face inférieure 36 du volet d'obturation 30, lorsque ce dernier est dans sa position fermée.

Chaque bras de verrouillage 76 est sollicité élastiquement vers sa position de verrouillage positif illustrée aux figures 2 à 6, par un ressort de verrouillage 100 qui prend appui d'une part dans un logement complémentaire 102 formé par la paroi interne en vis-à-vis du bol 12 et, d'autre part dans un logement borgne 104 formé dans la partie médiane du bras 76.

Chaque ressort 100 est un ressort hélicoïdal de compression qui sollicite les doigts de verrouillage 96 vers le centre du bol et les rampes de commande 92 dans la direction correspondant à leur rapprochement mutuel.

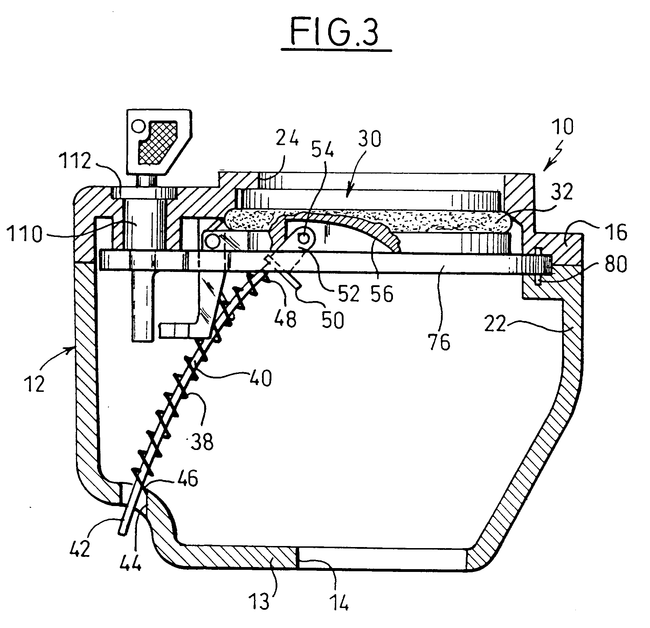

Conformément à l'invention, il est prévu un rotor de commande 110 qui, dans le premier mode de réalisation illustré aux figures 2 et 3 est constitué par le barillet d'un verrou 112 à clé 114 qui se prolonge axialement par une tige cylindrique de 116.

Le verrou 112 est du type comportant des moyens de rappel de la clé en position neutre, qui sera par la suite appelée la position de verrouillage, du rotor et de la clé, ces moyens de rappel élastique n'étant pas représentés sur les figures.

La tige d'entraînement 116 comporte une patte radiale d'entraînement 118 qui est solidaire en rotation de la tige 116 et donc du rotor de commande.

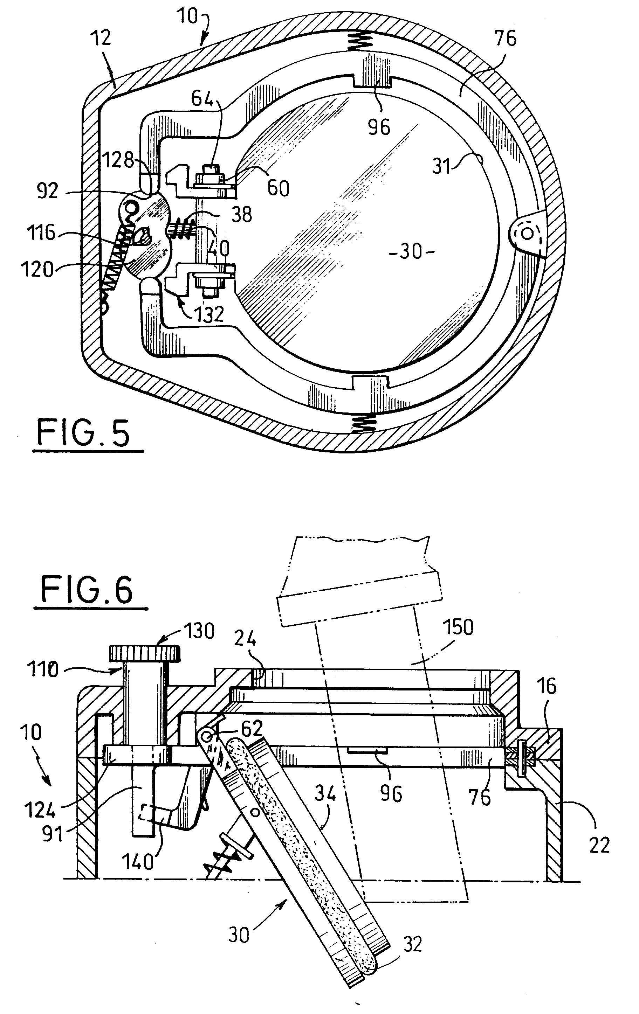

La tige 116 et la patte 118 sont montées à rotation entre la position de verrouillage illustrée aux figures 1 et 2 et la position de déverrouillage illustrée notamment à la figure 5.

Les moyens de commande de déverrouillage comportent également un tambour de commande 120 qui est percé d'une lumière en forme de secteur cylindrique creux 119 dans laquelle est reçue la patte d'entraînement 118.

Le tambour de commande 120 peut ainsi pivoter par rapport et autour de la tige 116 avec un débattement angulaire possible entre ces deux éléments qui s'étend sur un secteur d'angle sensiblement égal à 90° qui est délimité par les faces radiales d'extrémité de l'évidement cylindrique 119.

Le tambour de commande 120 est rappelé élastiquement dans sa position de verrouillage illustrée aux figures 1 et 2 par un ressort de rappel 122 qui le sollicite en permanence vers cette position.

La paroi latérale 124 du tambour de commande 120 constitue une came de commande du déverrouillage des bras de verrouillage 76.

Comme on peut le voir sur les figures 1, 4 et 5, la came 124 présente sensiblement un profil à quatre lobes et est susceptible d'occuper, sous l'action du rotor de commande, deux positions fonctionnelles.

Dans la première position fonctionnelle illustrée notamment à la figure 1, les surfaces de commande 92 formées aux extrémités 90 des bras de commande 76 sont sollicitées en appui dans deux creux diamétralement opposés 126 tandis que, dans la position de déverrouillage illustrée à la figure 5, les surfaces de commande 92 sont reçues dans deux creux diamétralement opposés 128 qui sont décalés angulairement de 90° par rapport aux creux 126, la distance séparant les creux 128 de la came 124 étant nettement supérieure à celle qui sépare les creux 126.

La rotation d'un quart de tour de la came 124, dans le sens horaire à partir de la figure 1, provoque donc l'écartement des surfaces de commande 92 et ainsi l'écartement des bras 76 jusqu'à leur position de déverrouillage illustrée à la figure 5 dans laquelle les doigts de verrouillage 96 sont en retrait de la face inférieure 36 du volet d'obturation de manière à permettre un pivotement libre de ce dernier autour de son axe X-X.

Une variante de réalisation du rotor 110 est illustrée sur la figure 6 dans laquelle le verrou est remplacée par un bouton de commande rotatif 130 auquel est liée la tige d'entraînement 116 et la patte 118.

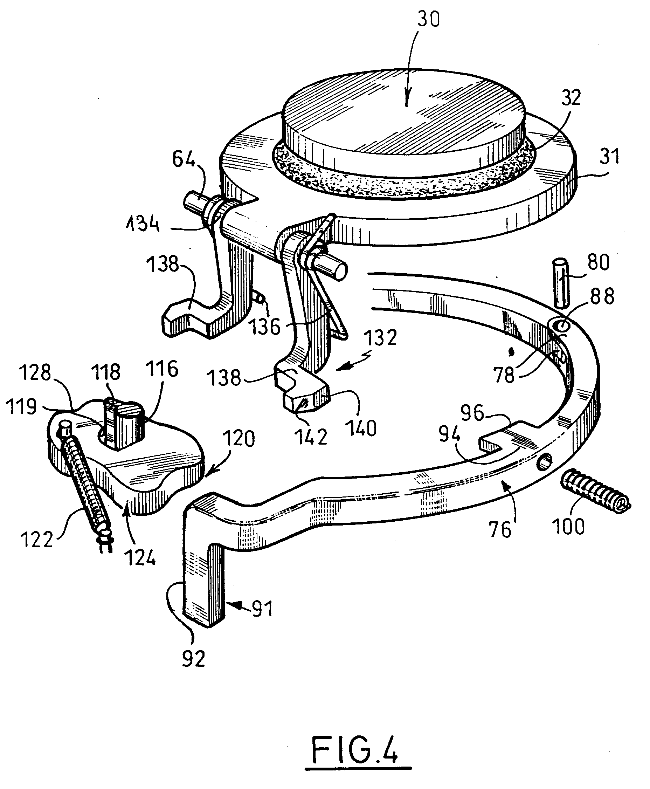

Les extrémités opposées 64 de l'axe 62 d'articulation du volet 30 portent chacune, comme on peut le voir clairement à la figure 4, un levier de butée 132 qui est articulé au voisinage de son extrémité supérieure 134 sur une extrémité 64.

Chaque bras de butée 132 s'étend sensiblement verticalement vers le bas et il est sollicité en rotation, dans le sens horaire en considérant les figures 2 et 4 par un ressort en fil 136. A titre de variante (non représentée) les bras 132 pourraient être réalisés venus de matière avec le volet.

L'extrémité inférieure 138 de chaque bras de butée 132 comporte une surface latérale de butée 140 qui, comme cela sera expliqué par la suite, est susceptible de coopérer avec une des surfaces de commande 92, chaque surface de butée 140 étant complétée par un chanfrein d'introduction 142.

La distance séparant les deux surfaces latérales de butée 140 est supérieure à la distance séparant diamétralement les deux creux 128 de la came 124.

On décira maintenant le mode de fonctionnement de la tête de remplissage illustrée sur les figures.

Dans la position illustrée aux figures 1 à 3, le volet d'obturation 30 est en position fermée et verrouillée et le rotor 110 est dans sa position neutre de verrouillage.

Lorsqu'un utilisateur désire procéder au remplissage du réservoir de carburant, à l'aide d'une lance de distribution, il commence par procéder au déverrouillage du boîtier d'obturation 30.

A cet effet, l'utilisateur provoque une rotation du rotor de commande 110, par exemple au moyen de la clé 114, de manière que ce dernier effectue un quart de tour, à partir de la position illustrée à la figure 1 et dans le sens horaire, pour l'amener, ainsi que le tambour de commande 120, dans la position illustrée à la figure 5.

Comme cela a été expliqué précédemment, le volet d'obturation 30 est alors déverrouillé et il est libre de pivoter autour de son axe 62.

L'utilisateur peut alors relâcher son action sur le rotor qui est rappelé élastiquement en position de déverrouillage, le tambour 120 et la came 124 demeurant dans leur position illustrée à la figure 5, sous l'action de pince exercée par les surfaces de commande 92 des bras de verrouillage 76, sollicités par les ressorts 100, qui sont reçues dans les creux 128 de la came.

Le débattement angulaire relatif de la tige de commande 116, qui revient vers sa position de verrouillage illustrée à la figure 1, par rapport au tambour de commande 120 est rendu possible grâce à la présence de lumière en arc de cercle 119.

Les opérations de remplissage se poursuivent par introduction d'une lance de remplissage qui est illustrée en silhouette à la figure 6 et qui est désignée par la référence 150.

Cet action d'introduction de la lance 150 provoque, du fait de la coopération de l'extrémité de la lance avec la face supérieure 34 du volet d'obturation 30, le pivotement de ce dernier autour de l'axe X-X dans le sens horaire en considérant les figures.

Le pivotement s'effectue à l'encontre de l'effort de rappel exercé par le ressort 38.

Le pivotement du volet d'obturation 30 provoque également la pénétration des chanfreins 142 entre les parties des surfaces de commande 92 à la partie inférieure des prolongements verticaux 91, puis la pénétration des surfaces de butée 140 entre ces surfaces de commande 192.

Cette introduction des surfaces de butée 140 a pour effet de provoquer un écartement ou éloignement supplémentaire des surfaces 92 l'une de l'autre ce qui provoque immédiatement la libération du tambour de commande 120 avec sa came 124 qui, sous l'action du ressort de rappel 122, revient dans sa position de verrouillage illustrée à la figure 1.

Les opérations de remplissage peuvent alors débuter dans la mesure où l'utilisateur a pu introduire la lance 150 dans le bol 12 et dans l'orifice inférieur 14 de ce dernier.

Lorsque le remplissage du réservoir est terminé, l'utilisateur retire complètement la lance 150 du bol 12.

Dès que la lance est retirée, le ressort de rappel 38 provoque le retour en position haute fermée du volet d'obturation 30 qui pivote alors autour de l'axe X-X dans le sens anti-horaire à partir de sa position illustrée à la figure 6.

A la fin de la course de pivotement, les faces de butée 140 se dégagent d'entre les surfaces de commande 92 des bras de verrouillage 76, ces derniers étant alors rappelés automatiquement par les ressorts de verrouillage 100 vers leur position de verrouillage illustrée aux figures 1 et 2.

La fermeture automatique du volet d'obturation 30 provoque donc ainsi, en fin de course de fermeture, le verrouillage automatique du volet d'obturation qui est à nouveau dans sa position fermée et verrouillée illustrée notamment aux figures 1 et 2, le rotor de commande étant aussi en position de verrouillage comme cela a été expliqué précédemment.

Aucune ouverture du volet d'obturation 30, même accidentelle, n'est possible sans une action volontaire sur le rotor de commande 110.

Le rotor de commande est illustré ici sous la forme d'un rotor à commande manuelle, mais il est bien entendu possible, sans sortir du cadre de la présente invention, de concevoir tout type de dispositif ou de mécanisme de commande à distance du rotor 110.

On constate qu'une opération de remplissage ne nécessite aucune opération manuelle de l'utilisateur sur un quelconque bouchon de fermeture de canalisation, opération habituelle et généralement salissante pour l'utilisateur et complexe à exécuter.

Le verrouillage en position fermée du volet d'obturation 30 est également complètement indépendant d'un quelconque verrouillage d'une trappe d'accès de la tête de remplissage.

L'effort d'introduction de la lance est très faible dans la mesure où il suffit de vaincre l'effort du ressort de rappel 38, les efforts nécessaires au déverrouillage du volet d'obturation 30 étant indépendants de l'introduction de la lance 150.

## Revendications

1. Tête de remplissage pour une canalisation de remplissage d'un réservoir de carburant de véhicule automobile, du type comportant un corps en forme de bol (12) dont la face supérieure (16, 20) présente un orifice de remplissage (24), et un volet d'obturation (30) monté pivotant par rapport au bol (12) entre une position de repos vers laquelle il est rappelé élastiquement et dans laquelle il obture l'orifice de remplissage (24) et une position effacée à l'intérieur du bol (12) dans laquelle l'orifice de remplissage (24) est dégagé et vers laquelle il est entraîné lors de l'introduction d'une lance de remplissage (150) dans l'orifice de remplissage (24), comportant des moyens (76, 96) de verrouillage automatique en position de repos du volet d'obturation (30) comportant un rotor (110) de commande du déverrouillage monté tournant entre une position de verrouillage et une position de déverrouillage, le volet d'obturation (30) étant rappelé élastiquement en appui contre un siège (28) formé autour de l'orifice de remplissage (24), les moyens de verrouillage comportant au moins un doigt de verrouillage (96) monté mobile entre une position de verrouillage vers laquelle il est sollicité élastiquement et dans laquelle il s'étend en regard d'une portion de la face inférieure (36) du volet, et une position de déverrouillage dans laquelle il est escamoté latéralement en retrait de ladite portion de la face inférieure (32) du volet d'obturation, et le rotor de commande (110) du déverrouillage commandant les déplacements du doigt de verrouillage (96) à l'encontre des moyens élastiques (100) qui le sollicitent, caractérisée en ce que le doigt de verrouillage (96) est agencé dans la partie centrale (94) d'un bras de verrouillage (76) dont une première extrémité (78) est montée articulée par rapport au bol (12) autour d'un axe (80) perpendiculaire à la face supérieure du bol (12), qui entoure le bord latéral du volet d'obturation (30) et dont la seconde extrémité (90) comporte une surface de commande (92) susceptible de coopérer avec une came de commande (124) liée en rotation avec le rotor de commande (110).

2. Tête de remplissage selon la revendication 1, caractérisée en ce que le rotor de commande (110) est monté tournant autour d'un axe perpendiculaire à l'axe de pivotement du volet d'obturation.

3. Tête de remplissage selon la revendication 2, caractérisée en ce que l'axe de rotation du rotor (110) est perpendiculaire à la face supérieure du bol (12).

4. Tête de remplissage selon l'une quelconque des revendications 1 à 3, caractérisée en ce que la came de commande (124) est formée sur la paroi latérale d'un tambour de commande (120) lié en rotation avec le rotor de commande (110).

5. Tête de remplissage selon la revendication 4, caractérisée en ce que le tambour de commande (120) est monté tournant par rapport au rotor de commande (110), et en ce qu'il est prévu des moyens d'accouplement en rotation (116, 118, 119) entre le tambour (120) et le rotor de commande (110) qui autorisent un débattement angulaire relatif entre ces deux éléments.

6. Tête de remplissage selon la revendication 5, caractérisée en ce que le rotor (110) comporte une patte radiale d'accouplement (118) qui s'étend dans une lumière (119) en forme de secteur cylindrique qui est formée dans le tambour de commande (120) et dont l'angle détermine la valeur dudit débattement angulaire.

7. Tête de remplissage selon l'une quelconque des revendications précédentes, caractérisée en ce que le volet (30) comporte un élément de butée (132) dont une face latérale (140) coopère avec ladite surface de commande (92) du bras de verrouillage (76) portant le doigt de verrouillage (96) pour maintenir ce dernier en position déverrouillée lorsque le volet d'obturation (30) est dans sa position effacée et le tambour (120) en position de verrouillage.

8. Tête de remplissage selon la revendication 7 caractérisée en ce que le tambour de commande (120) est adjacent à l'axe de pivotement (62, 64) du volet d'obturation (30), et ce que l'élément de butée est formé sur un bras de butée (132) qui s'étend en-dessous de la face inférieure (32) du volet d'obturation (30) et qui comporte une surface de butée (140) qui coopère avec la dite surface de commande (92).

9. Tête de remplissage selon la revendication 8, caractérisée en ce que la surface de commande (92) est formée sur un prolongement (91) du bras de verrouillage (76) qui s'étend parallèlement à l'axe d'articulation (80) du bras de verrouillage (76).

10. Tête de remplissage selon l'une quelconque des revendications 1 à 9, caractérisée en ce que la came de commande (124) est rappelée élastiquement vers sa position de verrouillage et ce qu'il est prévu des moyens d'immobilisation temporaire de la came (124) en position de déverrouillage qui sont portés par les bras de verrouillage (76, 92).

11. Tête de remplissage selon l'une quelconque des revendications précédentes, caractérisée en ce que le rotor de commande est solidaire en rotation du barillet d'un verrou de commande du déverrouillage.

12. Tête de remplissage selon l'une quelconque des revendications 1 à 10, caractérisée en ce que le rotor de commande est solidaire en rotation d'un bouton de commande du déverrouillage.

13. Tête de remplissage selon l'une des revendications 11 ou 12, caractérisée en ce qu'elle comporte des moyens élastiques de rappel (122) du tambour en position de verrouillage.

14. Tête de remplissage selon l'une quelconque des revendications précédentes, caractérisée en ce que la face supérieure du bol est constituée par un couvercle (16) dans lequel est formé l'orifice de remplissage (24), et en ce que le volet d'obturation (30) est articulé sur la face inférieure (18) du couvercle (16).

15. Tête de remplissage selon l'une quelconque des revendications précédentes, caractérisée en ce qu'elle présente une symétrie de conception de part et d'autre d'un plan médian perpendiculaire à l'axe de pivotement (X-X) du volet d'obturation (30).

## Claims

1. Filling head for a motor vehicle fuel tank filler pipe, of the type having a body in the shape of a bowl (12), the top face (16, 20) of which has a filling orifice (24), and a closure flap (30) mounted so as to pivot with respect to the bowl (12) between an idle position to which it is returned elastically and in which it closes off the filling orifice (24), and a retracted position inside the bowl (12) in which the filling orifice (24) is left clear and towards which it is driven when a filling nozzle (150) is inserted in the filling orifice (24), having means (76, 96) for automatically locking the closure flap (30) in the idle position, including a rotor (110) for controlling unlocking and mounted so as to rotate between a locking position and an unlocking position, the closure flap (30) being returned elastically in abutment against a seat (28) formed around the filling orifice (24), the locking means including at least one locking finger (96) mounted so as to be able to move between a locking position towards which it is forced elastically and in which it extends opposite a portion of the bottom face (36) of the flap, and an unlocking position in which it is retracted laterally whilst being recessed with respect to the said portion of the bottom face (32) of the closure flap, and the rotor (110) for controlling unlocking controlling the movements of the locking finger (96) counter to elastic means (100) which act on it, characterised in that the locking finger (96) is arranged in the central part (94) of a locking arm (76), a first end (78) of which is mounted so as to be articulated, with respect to the bowl (12), about a spindle (80) perpendicular to the top face of the bowl (12), which surrounds the lateral edge of the closure flap (30), and the second end (90) of which has a control surface (92) able to cooperate with a control cam (124) rotatably connected with the control rotor (110).

2. Filling head according to Claim 1, characterised in that the control rotor (110) is mounted so as to rotate about an axis perpendicular to the pivot axis of the closure flap.

3. Filling head according to Claim 2, characterised in that the axis of rotation of the rotor (110) is perpendicular to the top face of the bowl (12).

4. Filling head according to any one of Claims 1 to 3, characterised in that the control cam (124) is formed on the lateral wall of a control drum (120) rotatably connected with the control rotor (110).

5. Filling head according to Claim 4, characterised in that the control drum (12) is mounted so as to rotate with respect to the control rotor (110), and in that provision is made for rotational coupling means (116, 118, 119) between the drum (120) and the control rotor (110) which allow a relative angular movement between these two components.

6. Filling head according to Claim 5, characterised in that the rotor (110) has a radial coupling lug (118) which extends in an aperture (119) in the shape of a cylindrical sector which is formed in the control drum (120) and the angle of which determines the value of the said angular movement.

7. Filling head according to any one of the preceding claims, characterised in that the flap (30) has a stop element (132), a lateral face (140) of which cooperates with the said control surface (92) of the locking arm (76) carrying the locking finger (96) so as to hold the latter in the unlocked position when the closure flap (30) is in its retracted position and the drum (120) in the locking position.

8. Filling head according to Claim 7, characterised in that the control drum (120) is adjacent to the pivot pin (62, 64) of the closure flap (30), and in that the stop element is formed on a stop arm (132) which extends below the bottom face (32) of the closure flap (30) and which has a stop surface (140) which cooperates with the said control surface (92).

9. Filling head according to Claim 8, characterised in that the control surface (92) is formed on an extension (91) of the locking arm (76) which extends parallel to the articulation spindle (80) of the locking arm (76).

10. Filling head according to any one of Claims 1 to 9, characterised in that the control cam (124) is elastically returned towards its locking position and in that means are provided for temporarily immobilising the cam (124) in the unlocking position, which are carried by the locking arms (76, 92).

11. Filling head according to any one of the preceding claims, characterised in that the control rotor is fixed with respect to rotation to the barrel of a lock controlling the unlocking.

12. Filling head according to any one of Claims 1 to 10, characterised in that the control rotor is fixed with respect to rotation to a knob controlling the unlocking.

13. Filling head according to one of Claims 11 or 12, characterised in that it has means (122) of elastically returning the drum into the locking position.

14. Filling head according to any one of the preceding claims, characterised in that the top face of the bowl consists of a cover (16) in which the filling orifice (24) is formed, and in that the closure flap (30) is articulated on the bottom face (18) of the cover (16).

15. Filling head according to any one of the preceding claims, characterised in that it has symmetry of design on each side of a mid-plane perpendicular to the pivot axis (X-X) of the closure flap (30).

## Patentansprüche

1. Füllkopf für ein Einfüllrohr des Kraftstofftanks eines Kraftfahrzeugs, mit einem Körper in Form einer Schale (12), deren Oberseite (16, 20) eine Einfüllöffnung (24) aufweist, und mit einer Verschlußklappe (30), die im Verhältnis zur Schale (12) schwenkbar zwischen einer Ruheposition, zu der sie elastisch zurückgestellt wird und in der sie die Einfüllöffnung (24) verschließt, und einer in das Innere der Schale (12) eingeklappten Position schwenkbar gelagert ist, in der die Einfüllöffnung (24) freigegeben ist und zu der sie beim Einsetzen des Zapfventils (150) in die Einfüllöffnung (24) bewegt wird, sowie mit Mitteln (76, 96) für eine automatische Verriegelung der Verschlußklape (30) in Ruheposition, mit einem Rotor (110) zur Betätigung der Entriegelung, der drehbar zwischen einer Verriegelungsposition und einer Entriegelungsposition gelagert ist, wobei die Verschlußklappe (30) elastisch in Anlage an einen Sitz (28) zurückgestellt wird, der um die Einfüllöffnung (24) herum ausgebildet ist, wobei die Verriegelungsmittel mindestens einen Verriegelungsfinger (96) umfassen, der beweglich zwischen einer Verriegelungsposition, zu der er elastisch beaufschlagt wird und in der er sich gegenüber einem Abschnitt der Unterseite (36) der Verschlußklappe erstreckt, und einer Entriegelungsposition gelagert ist, in der er seitlich hinter dem besagten Abschnitt der Unterseite (32) der Verschlußklappe zurückspringend eingeklappt wird, und wobei der Rotor (110) zur Betätigung der Entriegelung die Verschiebungen des Verriegelungsfingers (96) entgegen den elastischen Mitteln (100) betätigt, durch die er beaufschlagt wird, **dadurch gekennzeichnet**, daß der Verriegelungsfinger (96) im Mittelteil (94) eines Verriegelungsarms (76) angeordnet ist, dessen erstes Ende (78) im Verhältnis zur Schale (12) schwenkbar um einen Gelenkbolzen (80) gelagert ist, der senkrecht zur Oberseite der Schale (12) verläuft, weiche die Seitenkante der Verschlußklappe (30) umgibt, und dessen zweites Ende (90) eine Betätigungsfläche (92) umfaßt, die mit einem Betätigungsnocken (124) zusammenwirken kann, der drehfest mit dem dem Betätigungsrotor verbunden ist.

2. Füllkopf nach Anspruch 1 , **dadurch gekennzeichnet,** daß der Betätigungsrotor (110) drehbar um eine senkrecht zur Schwenkachse der Verschlußklappe angeordnete Achse gelagert ist.

3. Füllkopf nach Anspruch 2 , **dadurch gekennzeichnet,** daß die Drehachse des Rotors (110) senkrecht zur Oberseite der Schale (12) verläuft.

4. Füllkopf nach einem der Ansprüche 1 bis 3 , **dadurch gekennzeichnet,** daß der Betätigungsnocken (124) an der Seitenwand einer Betätigungstrommel (120) gelagert ist, die drehfest mit dem Betätigungsrotor (110) verbunden ist.

5. Füllkopf nach Anspruch 4 , **dadurch gekennzeichnet,** daß die Betätigungstrommel (120) im Verhältnis zum Betätigungsrotor (110) drehbar gelagert ist und daß Mittel (116, 118, 119) für eine drehfeste Verbindung zwischen der Betätigungstrommel (120) und dem Betätigungsrotor (110) vorgesehen sind, die eine relative Winkelauslenkung zwischen diesen beiden Elementen zulassen.

6. Füllkopf nach Anspruch 5 , **dadurch gekennzeichnet,** daß der Rotor (110) einen radialen Verbindungsansatz (118) umfaßt, der sich in einem Schlitzloch (119) in Form eines Zylindersektors erstreckt, das in der Betätigungstrommel (120) ausgebildet ist und dessen Winkel den Wert der besagten Winkelauslenkung bestimmt.

7. Füllkopf nach einem der vorangehenden Ansprüche, **dadurch gekennzeichnet,** daß die Verschlußklappe (30) ein Anschlagelement (132) umfaßt, von dem eine Seitenfläche (140) mit der besagten Betätigungsfläche (92) des Verriegelungsarms (76) zusammenwirkt, der den Verriegelungsfinger (96) trägt, um diesen in Entriegelungsposition zu halten, wenn sich die Verschlußklappe (30) in ihrer eingeklappten Position und die Trommel (120) in der Verriegelungsposition befindet.

8. Füllkopf nach Anspruch 7 , **dadurch gekennzeichnet,** daß die Betätigungstrommel (120) an den Schwenkbolzen (62, 64) der Verschlußklappe (30) angrenzt und daß das Anschlagelement auf einem Anschlagarm (132) ausgebildet ist, der sich unterhalb der Unterseite (32) der Verschlußklappe (30) erstreckt und der eine Anschlagfläche (140) umfaßt, die mit der besagten Betätigungsfläche (92) zusammenwirkt.

9. Füllkopf nach Anspruch 8 **, dadurch gekennzeichnet,** daß die Betätigungsfläche (92) auf einer Verlängerung (91) des Verriegelungsarms (76) ausgebildet ist, die sich parallel zum Gelenkbolzen (80) des Verriegelungsarms (76) erstreckt.

10. Füllkopf nach einem der Ansprüche 1 bis 9 , **dadurch gekennzeichnet,** daß der Betätigungsnocken (124) elastisch zu seiner Verriegelungsposition zurückgestellt wird und daß Mittel für eine vorübergehende Sicherung des Nockens (124) in Entriegelungsposition vorgesehen sind, die am Verriegelungsarm (76, 92) angebracht sind.

11. Füllkopf nach einem der vorangehenden Ansprüche, **dadurch gekennzeichnet,** daß der Betätigungsrotor drehfest mit dem Zylinder eines Betätigungsschlosses für die Entriegelung verbunden ist.

12. Füllkopf nach einem der Ansprüche 1 bis 10 , **dadurch gekennzeichnet,** daß der Betätigungsrotor drehfest mit einem Betätigungsknopf für die Entriegelung verbunden ist.

13. Füllkopf nach einem der Ansprüche 11 oder 12, **dadurch gekennzeichnet,** daß er elastische Rückstellmittel (122) für die Rückstellung der Trommel in die Verriegelungsposition umfaßt.

14. Füllkopf nach einem der vorangehenden Ansprüche, **dadurch gekennzeichnet,** daß die Oberseite der Schale aus einem Deckel (16) besteht, in den die Einfüllöffnung (24) eingearbeitet ist, und daß die Verschlußklappe (30) an der Unterseite (18) des Deckels (16) angelenkt ist.

15. Füllkopf nach einem der vorangehenden Ansprüche, **dadurch gekennzeichnet,** daß er eine Gestaltungssymmetrie beiderseits einer Mittelebene aufweist, die senkrecht zur Schwenkachse (X-X) der Verschlußklappe (30) verläuft.
